# EUROPÄISCHE PATENTSCHRIFT

(11) **EP 2 002 702 B1**
(45) Veröffentlichungstag und Bekanntmachung des Hinweises auf die Patenterteilung: **18.11.2015**
(21) Anmeldenummer: 08010489.6
(22) Anmeldetag: 10.06.2008
(51) Int. Cl.: A01C 1/02, A01C 1/06

(54) **Verfahren zum Vorkeimen von Saatgut**
Method for pre-germinating seed
Procédé de prégermination de semences

(30) Priorität: 16.06.2007 DE 102007027758
(43) Veröffentlichungstag der Anmeldung: 17.12.2008
(73) Patentinhaber: KWS SAAT SE, 37574 Einbeck (DE)
(72) Erfinder: Bruno, Peter, 37574 Einbeck (DE)

(56) Entgegenhaltungen:
- EP-A- 0 887 004
- DE-A1- 1 567 190
- DE-A1- 2 755 801
- JP-A- 62 246 505
- US-A- 4 780 987

## Beschreibung

Die Erfindung betrifft ein Verfahren zum Vorkeimen von Saatgut zur Steigerung seiner Keimfähigkeit unter Einsatz von Hydratisierungstechniken und -Prozessen

### Hintergrund und Stand der Technik

Das Vorkeimen oder Priming ist ein wertvolles Verfahren, um die Keimung einer Vielzahl von kommerziellen Feldfrüchten zu beschleunigen und gleichförmiger zu gestalten. Ziel des Primings oder Vorkeimens ist es, die Leistungsfähigkeit des Saatgutes, insbesondere seine Keimbereitschaft und seine Jugendentwicklung, unter allen Wachstumsbedingungen zu gewährleisten.

Saatgut braucht bekannte, bestimmte Bedingungen, unter welchen es seine maximale Keimfähigkeit entfaltet und Keimlingspflanzen entwickelt. Die Keimfähigkeit kann durch widrige Wachstumsbedingungen außerhalb dieser optimalen Bedingungen derart beeinträchtigt werden, dass Keimversagen sowie der Verlust von Keimlingen auftreten kann. Solche suboptimalen Bedingungen liegen in den meisten Fällen normaler landwirtschaftlicher Anbauverfahren vor, weil Bodenfeuchte und Temperaturen nach der Saat nur noch den Witterungsbedingungen unterliegen.

Durch Priming oder Vorkeimen des Saatgutes kann das Saatgut den nach der Aussaat auftretenden Stress besser tolerieren. Das Saatgut wird durch die schnellere Keimlingsentwicklung wesentlich früher zu einer autonomen Pflanze und einem Keimversagen kann somit effektiv entgegengewirkt werden. Durch die schnellere Keimlingsentwicklung entstehen gegenüber unbehandeltem Saatgut wesentlich früher assimilierende Pflanzen und das Wachstum setzt früher ein.

Daraus können ein Reihe von Vorteilen für das Wachstum der Pflanzen bis hin zu einer deutlichen Ertragsteigerung wirksam werden.

Im Stand der Technik sind diverse Primingverfahren bekannt, bei denen es sich meistens um eine Hydratisierung und ein Vorkeimen des Saatgutes bei einer bestimmten Feuchtigkeit und Temperatur über einen festgelegten Zeitraum handelt.

Die Umgebungsparameter, insbesondere Feuchtigkeit und Temperatur müssen differenziert auf die Physiologie der individuellen Samenarten abgestimmt werden. Dem keimenden Samen wird dabei nicht erlaubt, den Keimprozess zu beenden, sondern er wird zuvor auf den Lagerwassergehalt getrocknet, um bis zur Aussaat sicher gelagert werden zu können.

Letztlich führt das Priming zu einem kürzeren Ablauf des Keimungsprozesses nach Aussaat des Saatgutes und zu einer größeren Gleichförmigkeit, da eine Reihe physiologischer Prozesse im Samen bereits während des Primings ablaufen konnten. Die durch Priming erzielbare gesteigerte Keimfähigkeit ist zumindest teilweise auf eine Beseitigung interner Behinderung des Zellwachstums während des Vorkeimens zurückzuführen.

Die während des Primings stattfindenden physiologischen Prozesse erfolgen bei einem saatgutspezifischen Wassergehalt der Samen und einer bestimmten Temperatur. Die im Saatgut oder Samen ablaufenden Prozesse erfordern zudem die Bereitstellung von leicht verfügbarem Sauerstoff für die einsetzende Zellatmung und zur Vermeidung von unerwünschten Fäulnisvorgängen.

Etliche Keimprozesse können durch Einsatz diverser Primingverfahren vorweg eingeleitet, durchgeführt und spezifiziert werden. Danach kann der Keimprozess ohne Schädigung des Samens durch Trocknung und Lagerung bis zur Aussaat unterbrochen werden. Dermaßen geprimtes Saatgut keimt erheblich schneller und gleichförmiger als ungeprimtes bzw. unbehandeltes Saatgut.

Im Stand der Technik sind vornehmlich drei verschiedene Primingverfahren bekannt, das Drum-Priming, das Osmo-Priming sowie das Solidmatrix-Priming.

Bei dem aus der DE 695 10 492 T2 bekannten Drum-Priming-Verfahren wird "nacktes" Saatgut nach einer vorhergehenden Wäsche durch Trocknung auf definierte Wassergehalte eingestellt. Eine spezielle Trommel bewegt dabei das Saatgut über eine für das Saatgut charakteristische Zeitdauer bei möglichst konstanter Temperatur und Feuchte. Eine ständige Frischluftzufuhr stellt die notwendige Beatmung des Saatgutes sicher.

Nachteilig beim Drum-Priming ist die sehr schwierige Steuerung und Regelung der Feuchtigkeits- und Temperaturverhältnisse während des Primings. Durch die ständige Luftzufuhr für die Beatmung der Samen wird dem gesamten Primingprozess Wasser entzogen, wodurch nicht nur der Wassergehalt, sondern auch die Temperatur absinkt. Um exakte Feuchtigkeits- und Temperaturverhältnisse wiederherzustellen, muss sowohl die Feuchtigkeit als auch die Temperatur erhöht werden, wodurch ein Nachheizen während des Primings erforderlich wird.

Weiterhin nachteilig bei diesem Verfahren ist, dass das Saatgut durch die dauernde Bewegung in der Trommel während der Bearbeitungszeit großen mechanischen Belastungen ausgesetzt ist. Durch den hohen Feuchtigkeitsgehalt während des Primings und die dadurch hervorgerufenen Quellvorgänge des Saatgutes ist dieses sehr empfindlich gegenüber mechanischen Beanspruchungen. So können beispielsweise Deckelchen einzelner Samenknäuel abspringen, wodurch der Samen freigegeben wird und verloren gehen kann. Hierdurch entstehen erhebliche Verluste, so dass Drum-Priming letztlich nur für eine begrenzte Anzahl von Saatgutarten wirtschaftlich sinnvoll einsetzbar ist.

Beim Osmo-Priming gemäß der EP 0 660 659 B1 oder der EP 0 781 086 B1 werden "nackte" Samenknäuel in eine belüftete Lösung eines osmotischen Materials, üblicherweise Polyethylenglycol (PEG), eingetaucht. Da die Samenhülle permeabel für das osmotische Material ist, kann das osmotische Potenzial der Samen mit jenem der Lösung equilibrieren. Die Konzentration des osmotischen Materials wird dabei so gewählt, dass den Samen zwar ausreichend Wasser zum Vorkeimen zugeführt, jedoch ein Weiterkeimen durch eine zusätzliche Wasseraufnahme verhindert wird.

Problematisch bei diesem Osmo-Priming ist, dass für eine große Menge von Samen auch große Mengen der Lösungen des osmotischen Materials benötigt werden. Dies verursacht hohe Kosten und zieht Entsorgungsprobleme nach sich, insbesondere wenn der Lösung zusätzlich die üblichen Desinfektionsmittel zugesetzt worden sind.

Zudem ist die Sauerstoffabsorption der Samen durch das Eintauchen in die Lösung beschränkt, selbst wenn die Lösung belüftet wird. Das Priming ist bei einer auch mit Sauerstoff belüfteten osmotischen Lösung jedoch nicht immer gewährleistet, da sich der Sauerstoffübergang vom Gas zur osmotischen Lösung und von ihr zum Samen als schwierig erweist. Zudem wird der Sauerstoff durch die hohe organische Belastung der osmotischen Lösung nur unzureichend nutzbar sein.

Auch beim Osmo-Priming treten die bereits zum Drum-Priming als nachteilig beschriebenen mechanischen Belastungen des Saatguts auf, da auch hier die einzelnen Saatknäuel durch das Belüften gegeneinander bewegt werden. Zudem ist bisher ungeklärt, wie die osmotisch aktiven Substanzen verfahrenstechnisch wieder von den einzelnen Samenknäuel zu entfernen sind. Auch sind die Auswirkungen der osmotisch aktiven Substanzen auf den Feldaufgang und die weitere Entwicklung der Pflanze derzeit nicht verlässlich einschätzbar.

Das Solidmatrix-Priming basiert auf dem Einsatz eines Absorptionsmediums, wie beispielsweise Ton, Torf oder Vermiculite. Hierbei wird dem Saatgut nach dem Waschen der gewünschte Wasseranteil entzogen bzw. zugeführt. Das Saatgut wird nach dem Waschen mit dem Absorptionsmedium vermischt und das Ausmaß der Samenhydratation bzw. -Dehydration wird über den Wassergehalt des Mediums und das Medium/Samenverhältnis gesteuert. Nach dem erfolgten Vorkeimen oder Priming wird das Saatgut von dem Absorptionsmedium wieder getrennt.

Nachteilig bei diesem Verfahren sind die nicht überschaubaren thermischen Bedingungen, die durch die Vermischung mit dem Absorptionsmedium entstehen. Dieses Priming-Verfahren ist deshalb nur sehr ungenau steuerbar.

Da es für ein optimales Vorkeimungsverhalten während des Primings aber auf einen vordefinierten Temperaturverlauf ankommt, ist dieses Verfahren gar nicht oder nur bedingt mit Erfolg durchführbar. In der Praxis spielt es daher bislang kaum eine Rolle.

Ein weiteres Verfahren zum Vorkeimen von Saatgut ist aus der EP 0 887 004 bekannt.

Beim sogenannten Solidmatrix-Priming hat sich zudem auch die Belüftung des Saatgutes als problematisch herausgestellt. Eine optimale und ausreichende Sauerstoffzufuhr kann hierbei zumeist nicht zur Verfügung gestellt werden. Deshalb ist ein optimales Vorkeimverhalten mittels Solidmatrix-Priming so gut wie nicht erreichbar.

### Aufgabe

Der vorliegenden Erfindung liegt demgegenüber die Aufgabe zugrunde, ein Primingverfahren bzw. ein Verfahren zum Vorkeimen von Saatgut zur Verfügung zu stellen, bei welchem das Saatgut keinen oder nur geringen mechanischen Beanspruchungen ausgesetzt wird. Ziel der Erfindung ist ferner, eine während des Primingprozesses homogene und konstante Sauerstoffzufuhr zum Saatgut zu ermöglichen, um möglichst einheitlich vorgekeimtes Saatgut mit hervorragendem Keimverhalten zu erhalten.

### Erfindung und vorteilhafte Wirkungen

Die der Erfindung zugrunde liegende Aufgabe wird mit Hilfe eines Verfahrens zum Vorkeimen von Saatgut gemäß Patentanspruch 1 gelöst. Weitere vorteilhafte Ausführungsformen der Erfindung sind in den Unteransprüchen angegeben.

Das erfindungsgemäße Verfahren zielt auf das Vorkeimen von Saatgut oder Samen bzw. auf das Priming von Saatgut ab. Es ist insbesondere auf pilliertes, also auf Saatgut anwendbar, bei welchem die Samen von einer Hüllmasse umgeben sind. Zur Anpassung an die Aussaattechnik wird Saatgut in großem Umfang bzw. häufig durch Pillieren mit Hüllmasse in eine homogenere als die natürliche Form gebracht. Bevorzugt handelt es sich hierbei um so genannte anpillierte Hüllmassen.

Das erfindungsgemäße Verfahren zeichnet sich insbesondere dadurch aus, dass bei Erreichen eines vorbestimmten Wassergehaltes von 15 bis 55 Gew. % das pillierte Saatgut für ein gewisses Zeitintervall zur Einleitung eines Keim- oder Vorkeimprozesses aufbewahrt wird.

Für die Länge der vorbestimmten Verweildauer in dieser Aufbewahrungsphase verweilt das pillierte Saatgut unter vorgegebenen Umgebungsparametern, vorzugsweise zu nennen als Druck, Temperatur und/oder konstanter Luftfeuchtigkeit. Die Umgebungsparameter, unter welchen das Saatgut während des vorbestimmten Zeitintervalls aufbewahrt wird, bestimmen sich nach den physiologischen Parametern des zu behandelnden Saatgutes. Die Umgebungsparameter sind hierbei so gewählt, dass das Saatgut unter den vorgegebenen Bedingungen keimen kann.

Der Beginn dieser Aufbewahrungszeit bestimmt sich nach dem Wassergehalt des Saatgutes. Nach dem erfindungsgemäßen Verfahren ist nämlich vorgesehen, abhängig von dem im Saatgut vorherrschenden Wassergehalt dieses zum Zwecke des Keim- oder Vorkeimprozesses unter vorgegebenen und/oder steuerbaren Umgebungsparametern für das vorbestimmte Zeitintervall oder die vorbestimmte Verweildauer lediglich aufzubewahren, um in dieser Zeit ein Vorkeimen der Samen einzuleiten oder zu ermöglichen. Vorzugsweise wird ein solcher Wassergehalt des Samens gewählt, bei welchem in Kombination mit der während der Verweildauer vorgesehenen Umgebungstemperatur optimale Keimungsbedingungen für den jeweiligen Samen vorliegen.

Das erfindungsgemäße Verfahren zeichnet sich zudem dadurch aus, dass die Zusammensetzung der Hüllmasse, welche die vorzukeimenden Samen umgibt, derart gewählt ist, dass sie unter den bei der Aufbewahrung vorherrschenden Bedingungen bzw. unter den für die Verweildauer vorgegebenen Umgebungsparametern Sauerstoff freisetzt. Die Hüllmasse kann auch eine Zusammensetzung aufweisen, unter welcher sie zudem das aus den Atmungsprozessen entstandene Kohlendioxid absorbiert. Auf diese Art und Weise wird eine optimale Sauerstoffzufuhr während des Priming-Prozesses zur Verfügung gestellt, sodass nahezu ohne jegliche mechanische Beanspruchung auf die Samen eine optimale Sauerstoffversorgung während des Vorkeimens zur Verfügung gestellt werden kann. Somit kann geprimtes, also vorgekeimtes Saatgut hoher Güte und Homogenität erzeugt werden, ohne dass hierfür besonders aufwändige verfahrenstechnische Prozesse einzuleiten sind.

Durch die besondere Zusammensetzung der Hüllmasse sowie deren Abstimmung auf die während der Aufbewahrung der Samen vorgesehenen Umgebungsparameter kann in besonders einfacher Art und Weise eine zuverlässige, effiziente sowie prozesstechnisch besonders einfach handzuhabende Sauerstoffversorgung für die vorzukeimenden Samen zur Verfügung gestellt werden, die ein optimales und homogenes Vorbehandeln und Vorkeimverhalten für die Samen bewirkt.

Die erfindungsgemäße Hüllmasse ermöglicht somit erstmals, auch bereit pilliertes Saatgut einem Vorkeimprozess zu unterziehen. Im Gegensatz zu bekannten Primingverfahren wird bei der erfindungsgemäßen Hüllmasse der für das Priming erforderliche Sauerstoff direkt dort bereitgestellt, wo er auch benötigt wird, nämlich an dem jeweiligen Saatknäuel, bzw. lokal am Samen in einer bisher unerreicht genauen Dosierung.

Zum einen ist dadurch eine kontinuierliche Sauerstoffversorgung des Saatknäuels mit einem wesentlich höheren Partialdruck des Sauerstoffs am Verbrauchsort verwirklicht, sodass ein einheitliches Vorkeimen der gesamten Saatgutmasse erreicht werden kann. Weiterhin kann durch den während des Primings an jedem einzelnen Saatknäuel herrschenden gleich hohen Sauerstoffpartialdruck sowie der gleich hohen Temperatur und Luftfeuchte eine einheitliche physiologische Entwicklung aller Samen ermöglicht werden.

Dies macht sich als deutliche und reproduzierbare Steigerung der Aufgangsgeschwindigkeit bemerkbar und zeigt sich ebenfalls in der sehr deutlich verbesserten Homogenisierung und Jugendentwicklung der Pflanzen.

Zudem zeigte sich auch nach einer Lagerung über einen längeren Zeitraum, dass die Primingeffekte deutlich erhalten bleiben. Während ungeprimtes Saatgut vergleichbarer Gestalt messbare Einbußen durch Alterung erleidet, schreitet eine Alterung bei den vorgekeimten, geprimten Varianten langsamer voran.

Des Weiteren konnte festgestellt werden, dass die Belastung des erfindungsgemäß geprimten Saatguts mit samenbürtigen Auflaufkrankheiten im Aufgangsverhalten reduziert und nicht mehr sichtbar ist. Das Saatgut ist, mit oder ohne Fungizidanwendung, nach dem erfindungsgemäßen Priming saniert.

Weiterhin sind die nach dem erfindungsgemäßen Verfahren geprimten Samenknäuel keinerlei mechanischen Beanspruchungen ausgesetzt, sodass deren Qualität und Güte gesichert ist. Zudem ergibt sich eine deutlich verbesserte Energiebilanz für das Vorkeimverfahren, das das pillierte Saatgut im Gegensatz zu dem "nackten Saatgut" bei den bekannten Priming-Verfahren nicht mehr extra getrocknet und gelagert werden muss. Zudem sind für die Sauerstoffversorgung während des Priming-Vorganges die nach dem Stand der Technik erforderliche Belüftung über eine relativ lange Zeitdauer nicht mehr erforderlich.

Durch den niedrigeren Energiebedarf und die im Gegensatz zum Osmo-Priming beim erfindungsgemäßen Verfahren implizit nicht vorhandene Entsorgungsproblematik wird die Umwelt deutlich weniger belastet.

Auch gegenüber dem Drum-Priming hat das erfindungsgemäße Verfahren neben der geringeren mechanischen Beanspruchung des Saatguts den Vorteil, dass auf etwaige Vorrichtungen zur kontinuierlichen Luftzufuhr und Umwälzung des Saatgutes verzichtet werden kann. Dies wirkt sich besonders vorteilhaft bezüglich der Lagerhaltung, Kapazität und Komplexität der Bearbeitung des Saatgutes aus.

Nach einer ersten Weiterbildung der Erfindung werden nach Ablauf des vorbestimmten Zeitintervalls die während des vorbestimmten Zeitintervalls vorgekeimten Samen auf einen Lagerwassergehalt getrocknet. Durch diese Trocknung auf den Lagerwassergehalt, welcher typischerweise bei 5 bis 10 Gew.-% liegt, wird der Keimvorgang unterbrochen. Die Samen werden dadurch lagerfähig und können zu jeder gewünschten Zeit ausgesät werden.

Nach einer Weiterbildung der Erfindung ist vorgesehen, dass die Samen unmittelbar nach einem Pillieren der Hüllmasse auf den vorbestimmten Wassergehalt, welcher die erfindungsgemäße Aufbewahrung unter den vorgegebenen Umgebungsparameter triggert, getrocknet werden. Die frisch pillierten Samen werden hierbei vorzugsweise auf den vorbestimmten Wassergehalt von 55 bis 15 Gew.-% getrocknet. Abhängig von der jeweiligen Samenart ist ein derartiger Wassergehalt der Hüllmasse und/oder des darin eingebetteten Samens nahezu ideal für die Freisetzung von Sauerstoff unter den für die Aufbewahrungszeit vorgesehenen Umgebungsparametern.

In anderen Worten wird der sich an das Pillieren der Samen anschließende Trocknungsprozess durch die erfindungsgemäße Aufbewahrung unter vorgegebenen Umgebungsparametern für ein vorbestimmtes Zeitintervall unterbrochen. Hierzu können die pillierten und auf den vorbestimmten Wassergehalt getrockneten Samen einer Trocknungsvorrichtung entnommen und einem speziell dafür vorgesehenen Aufbewahrungsraum oder -Behälter zugeführt werden, welcher die für die Aufbewahrung optimalen Umgebungsparameter entweder aktiv steuert oder lediglich passiv im Wesentlichen konstant hält.

Weiterhin ist vorgesehen, dass die Samen für das Saatgut vor dem Pillieren gewaschen werden. Das Waschen dient der Vorbehandlung des Saatgutes, um lösliche keimungshemmende Stoffe zu entfernen und um den Infektionsdruck zu mindern. Die Dauer des Waschvorgangs beträgt abhängig von der Samenart oder dem vorzukeimenden Saatgut zwischen 30 Minuten und 8 Stunden.

Nach einer besonders vorteilhaften Ausführungsform der Erfindung ist vorgesehen, dass die Samen bei Temperaturen von 20 °C bis 36 °C unter den vorgegebenen Umgebungsparametern für das vorbestimmte Zeitintervall aufbewahrt werden. Die Hüllmasse ist derart zusammengesetzt, dass sie bei dieser Temperatur und dem oben angegebenen vorbestimmten Wassergehalt von vorzugsweise 55 bis 15 Gew.-% homogen und kontinuierlich Sauerstoff freisetzt, welcher im Zuge des Vorkeimprozesses von den Samen aufgenommen wird. Der von der Hüllmasse freigesetzte Sauerstoff steht dabei einem jeweiligen Saatknäuel sozusagen zum "Atmen" zur Verfügung.

Nach einer Weiterbildung der Erfindung beträgt das Zeitintervall, für welches das vorkeimende Saatgut unter den vorgegebenen Umgebungsparametern verweilt, etwa 30 Minuten bis 24 Stunden, unter einigen Umständen gegebenenfalls auch länger. Die exakt einzustellende Zeitdauer hängt hier von der Zusammensetzung und der Dimensionierung der Hüllmasse sowie von den vorgegebenen Umgebungsparametern und der Art der vorzukeimenden Samen ab.

Nach einer besonders vorteilhaften Ausführungsform der Erfindung ist vorgesehen, dass die Aufbewahrung der Samen für das vorbestimmte Zeitintervall unter vorgegebenen Umgebungsparametern in luftdicht verschließbaren Behältern und/oder in einem klimatisierten Raum erfolgt. Durch das luftdichte Verschließen der die pillierten Samen aufnehmenden Behälter können in besonders einfacher Art und Weise über die gesamte, für den Keim- oder Vorkeimprozess vorgesehene, Aufbewahrungszeit oder für das vorbestimmte Zeitintervall konstante äußere Umgebungsparameter einfach und zuverlässig eingestellt werden.

Insbesondere kann durch das Verschließen der Behälter oder die hermetische Verriegelung eines klimatisierten Raums eine steuerbare Luftfeuchtigkeit und/oder ein konstanter Luftdruck erreicht werden. Versuche haben jedoch ergeben, dass für den Keim- oder Vorkeimprozess vornehmlich die Parameter Wassergehalt der Hüllmasse und Umgebungstemperatur die dominierenden Parameter sind.

Nach einer weiteren vorteilhaften Ausführungsform der Erfindung weist die Samen umgebende Hüllmasse einen Sauerstoffdonator und eine Zündkomponente auf. Gegebenenfalls sind der Hüllmasse weitere chemisch wirksame Substanzen, wie etwa Fungizide, beigesetzt, die den Aufgang der Pflanze schützen sollen.

Es ist insbesondere vorgesehen, dass unter den bei der Aufbewahrung vorgesehenen und vorgegebenen Umgebungsparametern in der Hüllmasse eine Sauerstoff freisetzende chemische Reaktion abläuft. Diese chemische Reaktion wird insbesondere durch die Umgebungsparameter, insbesondere durch die Umgebungstemperatur, getriggert.

Die Parameter Wassergehalt der Hüllmasse und ihre Temperatur sind während der vorgesehenen Aufbewahrung derart aufeinander abgestimmt, dass zum einen ein Keim- oder Vorkeimprozess der Samen stattfinden und Sauerstoff aus der Hüllmasse an die Samen abgegeben werden kann.

Nach einer Weiterbildung der Erfindung ist vorgesehen, dass die der Hüllmasse beigesetzte Zündkomponente bei Erreichen des vorbestimmten Wassergehalts und der Aufbewahrungstemperatur die Sauerstoff freisetzende chemische Reaktion zündet oder einleitet.

Die von der Zündkomponente initiierte chemische Reaktion ist vorzugsweise exotherm. So trägt die bei der Reaktion freigesetzte Energie zur Konstanthaltung der Temperatur während der Aufbewahrung der Samen in den luftdicht verschlossenen Behältern bei.

Als Sauerstoffdonator ist nach einer weiteren Ausführungsform Calciumperoxid vorgesehen, während als Zündkomponente diverse Metallsalze, Chelatzusammensetzungen oder auch nur handelsübliche Spurenelementedünger zum Einsatz kommen können.
Nach einer Weiterbildung der Erfindung ist die Zusammensetzung und geometrische Abmessung der Hüllmasse derart gewählt, dass die Sauerstoffabgabe kontinuierlich während des gesamten Aufbewahrungszeitintervalls stattfindet. Auf diese Art und Weise wird über den gesamten Priming-Prozess eine optimale Sauerstoffversorgung der vorzukeimenden Samen gewährleistet.

Nach einer weiteren Weiterbildung der Erfindung kann zudem vorgesehen werden, dass nach einer dem Pillieren nachgeschalteten Trocknung zur Erreichung des vorbestimmten Wassergehalts zusätzlich eine Kühlung der pillierten Samen auf die während der Aufbewahrung vorgesehenen Temperatur erfolgt. Diese kurzzeitige Kühlung soll einer autogenen Erwärmung der zu primenden Samen entgegenwirken, welche unter Umständen zu einer höheren Temperatur als diejenige, welche für die Aufbewahrung vorgesehen ist, führen kann.

## Patentansprüche

1. Verfahren zum Vorkeimen von Saatgut, wobei pillierte, von einer Hüllmasse umgebene Samen nach einem Pillieren mit der Hüllmasse auf den vorbestimmten Wassergehalt von 15 bis 55 Gew.-% getrocknet und unter vorgegebenen Umgebungsparametern für ein vorbestimmtes Zeitintervall zur Einleitung eines Keim- oder Vorkeimprozesses aufbewahrt werden, wobei die Zusammensetzung der Hüllmasse derart gewählt ist, dass sie unter den Umgebungsparametern Sauerstoff freisetzt, wobei die Hüllmasse zumindest einen Sauerstoffdonator und eine katalytisch wirkende Zündkomponente aufweist und wobei nach Ablauf des Zeitintervalls die vorgekeimten Samen auf einen Lagerwassergehalt getrocknet werden.

2. Verfahren nach einem der vorhergehenden Ansprüche, wobei die Samen vor dem Pillieren gewaschen werden.

3. Verfahren nach einem der vorhergehenden Ansprüche, wobei die Samen bei Temperaturen von 20 °C bis 36 °C aufbewahrt werden.

4. Verfahren nach einem der vorhergehenden Ansprüche, wobei das Zeitintervall für die Aufbewahrung der Samen im Wesentlichen zwischen 30 Minuten und 24 Stunden beträgt.

5. Verfahren nach einem der vorhergehenden Ansprüche, wobei die Aufbewahrung der Samen in luftdicht verschließbare Behältern und/oder in einem klimatisierten Raum oder klimatisierten Behältnis erfolgt.

6. Verfahren nach einem der vorhergehenden Ansprüche, wobei unter den bei der Aufbewahrung vorgesehenen Umgebungsparametern in der Hüllmasse eine Sauerstoff freisetzende chemische Reaktion abläuft.

7. Verfahren nach Anspruch 6, wobei die Zündkomponente bei Erreichen des vorbestimmten Wassergehalts und der für die Aufbewahrung der Samen vorgesehenen Aufbewahrungstemperatur die chemische Reaktion beginnt.

8. Verfahren nach Anspruch 6 oder 7, wobei die chemische Reaktion eine exothermische chemische Reaktion ist.

9. Verfahren nach einem der Ansprüche 6 bis 8, wobei der Sauerstoffdonator Calciumperoxid ist.

10. Verfahren nach einem der vorhergehenden Ansprüche, wobei die Sauerstoffabgabe aus der Hüllmasse kontinuierlich während der Aufbewahrung der Samen unter den vorgegebenen Umgebungsparametern erfolgt.

11. Verfahren nach einem der vorhergehenden Ansprüche, wobei zwischen der dem Pillieren nachgeschalteten Trocknung und der Aufbewahrung der Samen unter den vorgegebenen Umgebungsparametern eine kontinuierliche Temperaturkontrolle und - anpassung der Samen auf die vorgegebenen Umgebungsparameter erfolgt.

12. Verfahren nach einem der vorhergehenden Ansprüche, wobei etwaiges von den Samen während der Aufbewahrung freigesetztes Kohlendioxid unter den vorgegebenen Umgebungsparametern von der Hüllmasse zumindest partiell absorbiert wird.

## Claims

1. A method for priming seed stock wherein, after pelleting with the pelleting substance, pelleted seeds enclosed by a pelleting substance are dried to a predetermined moisture content of 15% to 55% by weight and stored in accordance with prescribed environmental parameters for a predetermined time period in order to initiate a germination or priming process, wherein the composition of the pelleting substance is selected in a manner such that it releases oxygen under the environmental parameters, wherein the pelleting substance comprises at least one oxygen donor and a catalytically active initiator and wherein after expiry of the time period, the primed seeds are dried to a storage moisture content.

2. The method as claimed in claim 1, wherein the seeds are washed prior to pelleting.

3. The method as claimed in one of the preceding claims, wherein the seeds are stored at temperatures of 20°C to 36°C.

4. The method as claimed in one of the preceding claims, wherein the period of time for storage of the seeds is essentially in the range 30 minutes to 24 hours.

5. The method as claimed in one of the preceding claims, wherein the seeds are stored in airtight sealable containers and/or in a climate-controlled chamber or a climate-controlled container.

6. The method as claimed in one of the preceding claims wherein, under the environmental parameters provided for storage, an oxygen-releasing chemical reaction takes place in the pelleting substance.

7. The method as claimed in claim 6 wherein, upon reaching the predetermined moisture content and the storage temperature provided for storing the seeds, the initiator starts the chemical reaction.

8. The method as claimed in claim 6 or claim 7, wherein the chemical reaction is an exothermic chemical reaction.

9. The method as claimed in one of claims 6 to 8, wherein the oxygen donor is calcium peroxide.

10. The method as claimed in one of the preceding claims, wherein the oxygen is continuously released from the pelleting substance during storage of the seeds under the prescribed environmental parameters.

11. The method as claimed in one of the preceding claims wherein, between the drying step following the pelleting and storage of the seeds under the prescribed environmental parameters, the temperature of the seeds is continuously monitored and adjusted to the prescribed environmental parameters.

12. The method as claimed in one of the preceding claims, wherein any carbon dioxide released from the seeds during storage in accordance with the prescribed environmental parameters is at least partially absorbed by the pelleting substance.

## Revendications

1. Procédé destiné à initier la prégermination de semences, lors duquel on fait sécher des graines broyées, enrobées d'une masse d'enrobage après un broyage avec la masse d'enrobage à la teneur en eau prédéfinie de 15 à 55 % en poids et on les conserve en respectant des paramètres ambiants prédéfinis pour un intervalle de temps prédéfini, pour initier un processus de germination ou de prégermination, la composition de la masse d'enrobage étant choisie de telle sorte que sous les paramètres ambiants, elle libère de l'oxygène, la masse d'enrobage comportant au moins un donneur d'oxygène et un composant d'allumage à effet catalytique et après l'écoulement de l'intervalle de temps, les graines prégermées étant séchées à une teneur en eau propre au stockage.

2. Procédé selon la revendication 1, lors duquel on lave les graines avant de les broyer.

3. Procédé selon l'une quelconque des revendications précédentes, lors duquel on conserve les graines à des températures de 20 °C à 36 °C.

4. Procédé selon l'une quelconque des revendications précédentes, lors duquel l'intervalle de temps pour la conservation des graines est sensiblement compris entre 30 minutes et 24 heures.

5. Procédé selon l'une quelconque des revendications précédentes, lors duquel la conservation des graines s'effectue dans des récipients susceptibles d'être fermés de manière étanche à l'air et/ou dans un espace climatisé ou dans un contenant climatisé.

6. Procédé selon l'une quelconque des revendications précédentes, lors duquel, sous respect des paramètres ambiants prévus pour la conservation, il s'effectue dans la masse d'enrobage une réaction chimique libérant de l'oxygène.

7. Procédé selon la revendication 6, lors duquel le composant d'allumage amorce la réaction chimique à l'atteinte de la teneur en eau prédéfinie et de la température de conservation prévue pour la conservation des graines.

8. Procédé selon la revendication 6 ou la revendication 7, lors duquel la réaction chimique est une réaction exothermique.

9. Procédé selon l'une quelconque des revendications 6 à 8, lors duquel le donneur d'oxygène est un peroxyde de calcium.

10. Procédé selon l'une quelconque des revendications précédentes, lors duquel la restitution d'oxygène à partir de la masse d'enrobage s'effectue pendant la conservation des graines, sous respect des paramètres ambiants prédéfinis.

11. Procédé selon l'une quelconque des revendications précédentes, lors duquel entre le séchage pratiqué après le broyage et la conservation des graines sous respect des paramètres ambiants prédéfinis, il s'effectue un contrôle et une adaptation en continu de la température pour respecter les paramètres ambiants prédéfinis.

12. Procédé selon l'une quelconque des revendications précédentes, lors duquel du dioxyde de carbone éventuellement libéré pendant la conservation des graines est absorbé au moins en partie par la masse d'enrobage, sous respect des paramètres ambiants prédëfnis.
